(19) Europäisches Patentamt
European Patent Office
Office européen des brevets

(11) EP 2 079 009 A1

(12) EUROPEAN PATENT APPLICATION

(43) Date of publication:
15.07.2009 Bulletin 2009/29

(51) Int Cl.:
G06F 3/048 (2006.01)

(21) Application number: 08006423.1

(22) Date of filing: 31.03.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 09.01.2008 US 971783

(71) Applicant: Qualcomm Incorporated
San Diego, CA 92121-1714 (US)

(72) Inventor: Forutanpour, Babak
San Diego
CA 92121-1714 (US)

(74) Representative: Heselberger, Johannes et al
Patent- und Rechtsanwälte
Bardehle - Pagenberg - Dost
Altenburg - Geissler
Galileiplatz 1
81679 München (DE)

(54) **Apparatus and methods for a touch user interface using an image sensor**

(57) Apparatus and methods are presented for a touch user interface using an image sensor. A method for processing image-based input commands for a user interface includes receiving image frames from a sensor, determining when the sensor enters a cover state, determining, from subsequent image frames, when the sensor enters a de-cover state, analyzing information based upon the subsequent image frames to interpret a user command, and issuing the user command to a user interface. An apparatus having an image-based user interface includes an image sensor, and a processor connected to a memory, where the processor is configured with logic to receive image frames from the image sensor, to determine when the image sensor enters a cover state, determine, from subsequent image frames, when the image sensor enters a de-cover state, to analyze information based upon the subsequent image frames to interpret a user command, and to issue the user command to a user interface.

Fig. 1A

EP 2 079 009 A1

Fig. 1B

Fig. 1C

Fig. 1D

**Description**

**FIELD OF DISCLOSURE**

The embodiments of the disclosure relate generally to image sensor based interfaces, and more specifically, mobile devices having interfaces which utilize an image sensor for receiving user commands.

**BACKGROUND**

As mobile devices have increased in power and sophistication, user interface developers are facing the challenges of exploiting the devices' expanding capabilities while simultaneously improving their ease of use.

Touch screens have increased in popularity as a user interface for mobile devices due to recent advances multi-touch functionality and their intuitive approach which simplifies complex user interface navigation. Touch screens also may have the advantage of maximizing the screen size of the mobile device because real keyboards and/or other physical cursor control interfaces can be omitted. However, touch screens may be associated with a number of operational drawbacks, such as the lack of tactile feedback of virtual keyboards and other controls, screen occlusion by the user's finger, and/or the smudging the surface of the display during use. Moreover, touch screen displays are typically more expensive to develop and manufacture than their non-touch counterparts.

Given the aforementioned drawbacks of touch-screen displays, some users prefer using a physical keypad along with a smaller display on their mobile devices. In conjunction with such physical user interfaces, other conventional approaches have been suggested for bringing the intuitive nature of touch screen capabilities for use in existing and future mobile devices. These approaches can leverage the integrated digital cameras which are commonly included with many mobile devices.

Some of these conventional approaches suggest using MPEG motion vector algorithms to determine how a user is moving a hand in front of the camera. Other systems may estimate the orientation (e.g., tilt) of the mobile device using the integrated camera for determining user input. These approaches may involve algorithms operating in real-time to ensure the user interface is sufficiently responsive. Accordingly, they may be computationally intensive and can burden the mobile device's on-board processor(s) and/or utilize specialized hardware. The conventional approaches may therefore adversely impact cost and increase the power consumption of the mobile device.

In addition, these conventional approaches may require the user to perform exaggerated hand and/or arm motions in front of the camera, which may undesirably draw attention to the user and/or induce fatigue over time. Also, these algorithms may present challenges for determining how to designate selection points and/or performing relative navigation tasks (e.g., resetting selection points when sliding/dragging/etc. objects in the user interface a distance which exceeds a single user motion). Moreover, such techniques may require a user keeping his hand steady or still to properly make selections and/or to avoid unintentionally selecting an item.

Accordingly, it would be desirable provide a touch user interface navigation technique for existing and future camera phones, which can avoid the aforementioned drawbacks and be implemented in a cost-effective manner.

SUMMARY

Exemplary embodiments of the invention are directed to apparatus and methods for a touch user interface using an image sensor.

In one embodiment, a method for processing image-based input commands for a user interface is presented. The method may includes receiving image frames from a sensor, determining when the sensor enters a cover state, determining, from subsequent image frames, when the sensor enters a de-cover state, analyzing information based upon the subsequent image frames to interpret a user command, and issuing the user command to a user interface.

In another embodiment, an apparatus having an image-based user interface is presented. The apparatus may include an image sensor, and a processor connected a memory, where the processor is configured with logic to receive image frames from the image sensor, determine when the image sensor enters a cover state, determine, from subsequent image frames, when the image sensor enters a de-cover state, analyze information based upon the subsequent image frames to interpret a user command, and issue the user command to a user interface.

Another embodiment of the invention can include a mobile device having an image-based touch user interface, including a camera; and a processor connected to a memory. The processor includes logic configured to receive an image frame from the camera; to subdivide the image frame into tiles; compute a metric for each tile; to perform a count of the tiles which have a predetermined value for the metric; to determine a de-cover map based upon trail values from subsequent image files; to compute a gradient of a de-cover map; to determine the direction of movement based upon the gradient; and to issue a command to the user interface based upon the direction.

Another embodiment of the invention can include an apparatus for processing image-based input commands for a user interface, including means for receiving image frames from a sensor; means for determining when the sensor enters a cover state; means for determining, from subsequent image frames, when the sensor enters a de cover state; means for analyzing information based upon the subsequent image frames to interpret a user command; and means for issuing the user command to a user interface.

Another embodiment of the invention can include a computer-readable medium including program code stored thereon, which, when executed by a machine, cause the machine to perform operations for processing image-based input commands for a user interface. The computer-readable medium including program code to receive image frames from a sensor; program code to determine when the sensor enters a cover state; program code to determine, from subsequent image frames, when the sensor enters a de cover state; program code to analyze information based upon the subsequent image frames to interpret a user command; and program code to issue the user command to a user interface.

BRIEF DESCRIPTION OF THE DRAWINGS

The accompanying drawings are presented to aid in the description of embodiments of the invention and are provided solely for illustration of the embodiments and not limitation thereof.

Figs. 1A-1D are diagrams showing an overview of the operation of an exemplary mobile device having an image-based touch user interface.

Fig. 2 is a block diagram showing an exemplary configuration of a mobile device having an image-based touch user interface.

Fig. 3 is a flowchart depicting an exemplary top-level process associated with the image-based touch user interface.

Fig. 4 is a flowchart depicting an exemplary process for determining a cover state associated with the image-based touch user interface.

Fig. 5 is a flowchart depicting an exemplary process for determining a de-cover state associated with the image-based touch user interface.

Fig. 6 is a flowchart depicting an exemplary process for determining a user command associated with the image-based touch user interface.

DETAILED DESCRIPTION

Aspects of the invention are disclosed in the following description and related drawings directed to specific embodiments of the invention. Alternate embodiments may be devised without departing from the scope of the invention. Additionally, well-known elements of the invention will not be described in detail or will be omitted so as not to obscure the relevant details of the invention.

The word "exemplary" is used herein to mean "serving as an example, instance, or illustration." Any embodiment described herein as "exemplary" is not necessarily to be construed as preferred or advantageous over other embodiments. Likewise, the term "embodiments of the invention" does not require that all embodiments of the invention include the discussed feature, advantage or mode of operation.

The terminology used herein is for the purpose of describing particular embodiments only and is not intended to be limiting of embodiments of the invention. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

Further, many embodiments are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the invention may be embodied in a number of different forms, all of which have been contemplated to be within the scope of the claimed subject matter. In addition, for each of the embodiments described herein, the corresponding form of any such embodiments may be described herein as, for example, "logic configured to" perform the described action.

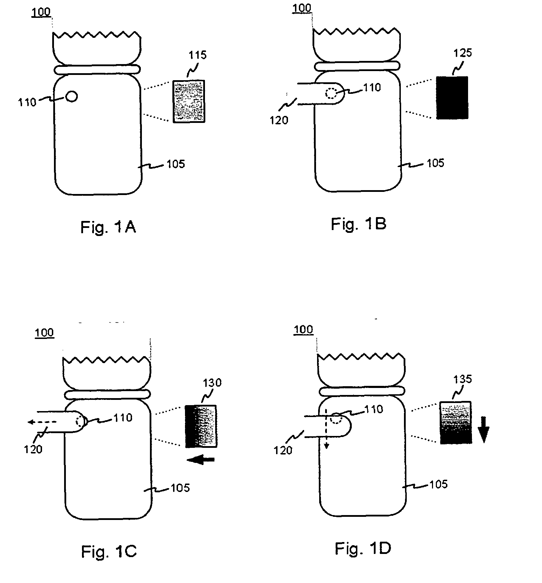

Figs. 1A-1D are diagrams showing an overview of the operation of an exemplary mobile device 100 having an image-based touch user interface (IBTUI).

Fig. 1A shows an exemplary mobile device 100 as a flip-phone (shown with the top portion of the phone cut away). The back surface 105 of the device includes the outer portion of an image sensor 110 which may be continuously collecting image frames 115. During operation, the IBTUI may track the path of an object exiting the field of view of the sensor 110 after the sensor has been covered. Once tracking is complete, a command may be interpreted by the IBTUI based upon the nature of the tracked motion.

As shown in Fig. 1B, a user may initiate command entry by initially placing a finger 120 over image sensor 110. This action may substantially cover or fully cover the image sensor 110 so as to produce one or more image frames 125 having low luminance values. This places the IBTUI in a "cover state," and signals the IBTUI to track the motion of finger 120 as it leaves the field of view of the image sensor 110. As shown in Fig. 1C, the finger 120 is leaving field of view of the image sensor 110 by moving towards the left of the page. A series of image frames 130 may be produced having luminance variations corresponding to this movement. The image frames may be processed to interpret the movement as a command. In this instance, the movement of the finger may be interpreted as a command to produce a corresponding movement of a cursor in the mobile device's graphical user interface (GUI). Fig. 1D shows a movement of the user's finger 120 going towards the bottom of the page, and a series of image frames 135 being produced having corresponding luminance variations. This movement may produce a command moving the cursor in the mobile device's GUI a downward. As will be described below, other movements and/or gestures may be interpreted as different commands.

While mobile device 100 is shown as a camera flip-phone, other embodiments of the invention may be directed to any type of device, as will be described in more detail below.

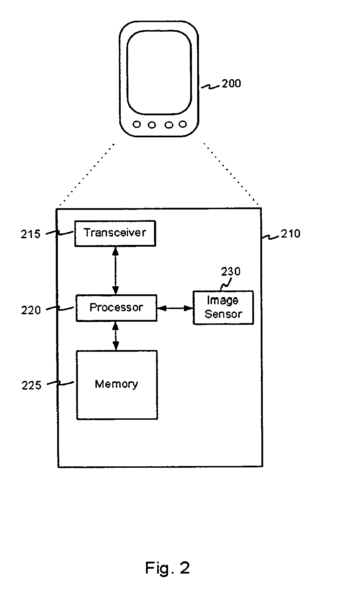

Fig. 2 is a block diagram showing an exemplary configuration 210 of a mobile device 200 having an image-based touch user interface (IBTUI). The mobile device 200 may have a platform 210 that can exchange data and/or commands over a network. The platform 210 can include a transceiver 215 (which may further include a transmitter and receiver which is not explicitly shown) operably coupled to a processor 220, or other controller, microprocessor, ASIC, logic circuit, or any other data processing device. The processor 220 may execute programs stored in the memory 225 of the mobile device 200. One program which may execute thereon can be associated with the image-based touch user interface which may provide inputs to the mobile device's 200 graphical user interface. The memory 225, which may store executable modules (e.g., the IBTUI, GUI, etc.), image frames, and other data structures, including those associating with the operation of the IBTUI. The memory 225 can be comprised of read-only and/or random-access memory (RAM and ROM), EEPROM, flash cards, or any memory common to such platforms. The image sensor 230 may be functionally coupled to the processor 220 and may typically be sensitive to visible light. Other embodiments of the invention may feature an image sensor 230 which is also capable of exploiting other wavelengths so the IBTUI may operate in the absence of visible light. An optical component of the image sensor associated with the outer surface of the mobile device 200 (e.g., a clear cover protecting a camera lens) may mounted in a recessed manner. With this arrangement, the user's finger may not actually come into physical contact with the image sensor, thus preventing the user's finger from introducing foreign objects (e.g. dirt, grease, etc.) into the image sensor's optical path, or otherwise damaging (e.g., scratching) the image sensor. Accordingly, the image-based touch user interface does not require actual touching of the image sensor.

The image sensor 230 may be a camera that records image frames at a periodic rate (e.g., 30 frames/second) and may use conventional digital video formats. When accepting user input via the IBTUI, the image sensor 230 may continuously provide image frames for IBTUI processing. For example, the image sensor 230 may be providing image frames to the processor 220 when the user is displaying a "Contacts" screen, in order to accept input from the user's finger for use in cursor movement and/or selection within the screen. When the image sensor 230 is not providing image frames for the IBTUI, the image sensor may serve to provide pictures and/or videos. Additionally, the image sensor 230 may collect, and the IBTUI may utilize, image frames without any conventional processing associated with improving the aesthetic qualities of the image frames. For example, when the image sensor is being used for the IBTUI, the image frames may not have any white balance, color balance, auto-focus, image sharpening, etc. performed. Omitting such processing will reduce the computational burden placed on the mobile device 100 when using the IBTUI, and may further enhance battery life.

The various logic elements for providing commands can be embodied in discrete elements, software modules executed on a processor or any combination of software and hardware to achieve the functionality disclosed herein. For example, the processor 220 and the memory 225 may all be used cooperatively to load, store and execute the various functions disclosed herein and thus the logic to perform these functions may be distributed over various elements. Alternatively, the functionality could be incorporated into one discrete component (e.g., in embedded memory in the processor 220). Therefore, the features of the mobile device 200 in FIG. 2 are to be considered merely illustrative and embodiments of the invention are not limited to the illustrated features or arrangement.

Moreover, embodiments of the invention may be used in conjunction with any device and are not limited to the illustrated embodiments. For example, devices can include cellular telephones, access terminals, personal digital assistants, music players, radios, GPS receivers, laptop computers, kiosks, and the like.

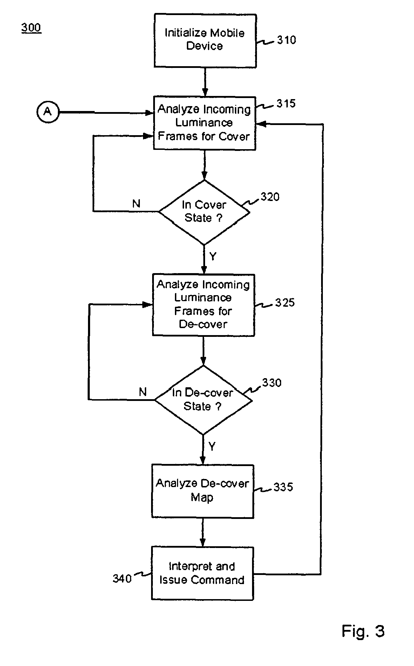

Fig. 3 is a flowchart depicting an exemplary top-level process 300 associated with the image-based touch user interface (IBTUI). The process 300 may begin when the mobile device 200 is initially turned on or power cycled, and the processor 220 begins initialization of a variety of processes for device operation (310). This may include the initialization of the graphical user interface and hardware and software/firmware/logic components associated with receiving and processing image frames from the image sensor 230. The image frames may be presented in a conventional video format (e.g., 30 frames/sec with each frame having 240x320 pixels) and use a luminance-chrominance color space (YCrCb). The frames may also be presented in a quasi-video format having a reduced frame rate and/or lower spatial sampling within each image frame. Additionally, the image frames may forgo pre-processing to enhance color, white balance, sharpness, and/or improve other esthetic qualities.

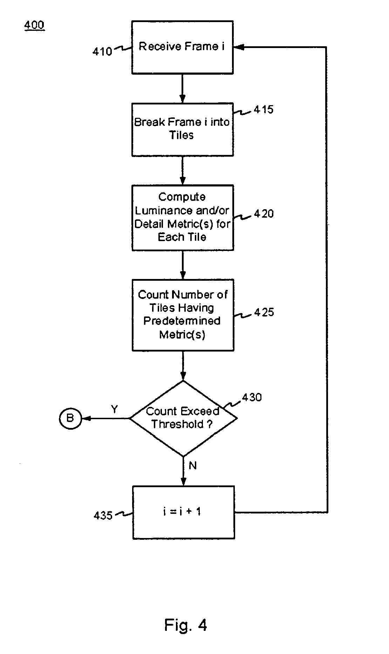

The process may then begin analyzing images generated by image sensor 230 to determine if the image sensor is in a cover state. As defined herein, the cover state occurs when the image sensor 230 is covered by an object (typically the user's finger). This analysis may be performed on the luminance channel of the image frames, and may include computing one or more metrics based upon average brightness and/or detail (315). These metrics may be statistical in nature, and will be described in more detail below. The process may then make a determination as to whether the image sensor is in a cover state by performing a threshold comparison using the metrics computed in Block 315 (320). If the determination indicates the image sensor 230 is in the cover state, the process proceeds to Block 325; otherwise, the analysis in Block 315 continues until the cover state is reached. Details of Blocks 315 and 320 are presented below in the description of Fig. 4.

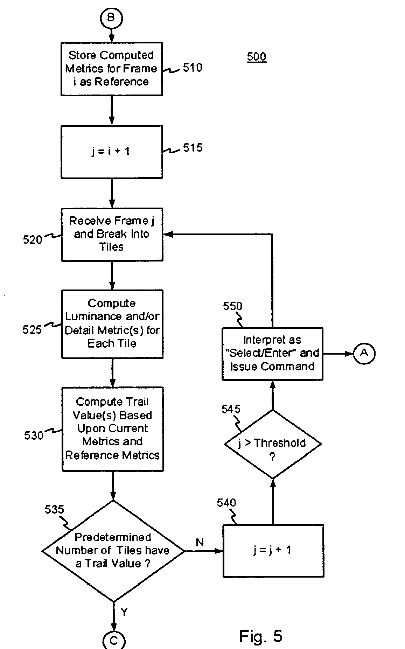

When it is determined that the image sensor has entered the cover state, the process 300 then begins analyzing subsequent image frames to determine when the image sensor transitions to the "de-cover state" (325 and 330). As used herein, the de-cover state defined as the state when the user's finger has moved off the image sensor to the extent where its motion may be reliably tracked. This may be determined by computing luminance and/or detail metrics and their changes over time. During this process, a de-cover map may be produced to store the computed metrics and their temporal variations. Once the de-cover map is complete, the process may proceed to Block 335 where the de-cover map is analyzed. Details of Blocks 325 and 330 are presented below in the description of Fig. 5.

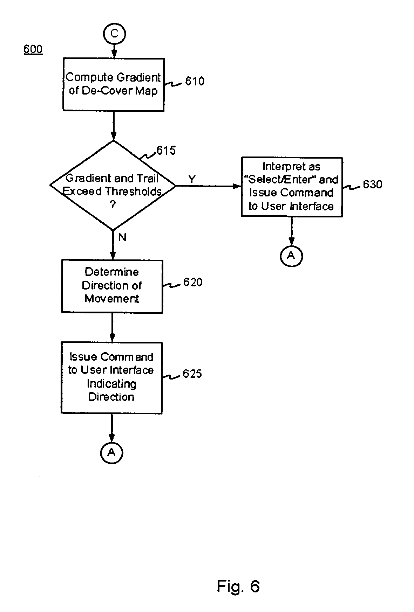

In block 335, the de-cover map is analyzed to determine how the finger moved off of the image sensor 230. By analyzing the spatial variations within the de-cover map, the direction of finger movement may be determined (335). This information may be used to interpret a command which may in turn be provided to the mobile device's graphical user interface. Details of Blocks 335 and 340 are presented below in the description of Fig. 6.

Accordingly, an embodiment of the invention may include a method 300 for processing image-based input commands for a user interface. The method may include receiving image frames from a sensor and determining when the sensor enters a cover state (315, 320), determining, from subsequent image frames, when the sensor enters a de-cover state (325, 330), analyzing information based upon the subsequent image frames to interpret a user command (335, 330), and issuing the user command to a user interface (340).

Moreover, another embodiment of the invention may include an apparatus 200 having an image-based user interface. The apparatus may include an image sensor 230 and a processor 220 connected to a memory 225. The processor may be configured with logic to receive image frames from a sensor and determine when the sensor enters a cover state (315, 320), determine, from subsequent image frames, when the sensor enters a de-cover state (325, 330), analyze information based upon the subsequent image frames to interpret a user command (335, 330), and issue the user command to a user interface (340).

Fig. 4 is a flowchart depicting an exemplary process 400 for determining a cover state associated with the image-based touch user interface. The process 400 may start out by receiving image frame i from the image sensor 200 (410). The image frame may then be subdivided into n x m tiles (e.g., each tile may include approximately 60 x 80 pixels and n = m = 4, for 240x320 portrait preview frame). Luminance and/or detail metrics may then be computed for each tile by processor 220 for pixels from the luminance channel of the image (420). The luminance metric for each tile may be computed by determining the average luminance within each tile. The detail metric may be computed by determining the standard deviation of each tile. The standard deviation (std) may be approximated by the following equation for quick execution by processor 220:

$$std = \frac{\sum_{val=0}^{255} hist(val) * |avg - val|}{255}$$

where
val: is the intensity values which may be taken on by 8-bit pixels;
hist(val): is the histogram of the luminance values, i.e. the number of pixels in the tile having luminance of

val; and

avg: is the previously computed average luminance value.

Note that the above equation assumes the luminance pixels are stored using 8-bit integers, but the equation may be modified to accommodate other data types and embodiments of the invention are not limited to the aforementioned equation or data type.

Once the luminance and/or detail metrics are computed for all of the tiles in image frame i, process 400 may proceed by counting the number of tiles which exceed a predetermined threshold value(s) (425). For example, in one embodiment, the number of tiles having an average value less than 30 and a std value less then 100 may be used to establish a count. This count number is then tested to determine if it exceeds a threshold value (430). The threshold value is predetermined, and it may be set to some fraction of the total number of tiles in the image frame (e.g., the predetermined threshold number may be set to .95*n*m). If the count number fails to exceed the threshold, the frame count is incremented and the next image frame is received for cover state determination processing (435, 410). Once it is determined that the count number exceeds the predetermined threshold number, the image sensor 230 is determined to be in a cover state. The processing may then proceed to the de-cover process 500, as described below.

Fig. 5 is a flowchart depicting an exemplary process 500 for determining a de-cover state associated with the image-based touch user interface. Initially, the metrics of the tile values corresponding to the image frame when the cover state was detected are stored 510. For example, the average luminance and the std may be stored for each tile. These metrics may be stored in a data structure referred herein as the reference tile metrics, wherein the table may take the form of a multi-dimensional matrix).

The next image frame is then received from image sensor 230, and is subdivided into n x m tiles as described above (515, 520). The process 500 may then compute luminance and/or detail metrics for each tile in a manner as described above for the cover state determination (525). Once processor 220 computes the metric(s) for each tile, each tile is examined and a trail value may be assigned thereto when the current tile's metric exceeds the corresponding reference tile's metric by a predetermined amount. This comparison process may be performed between each tile in the current image frame j, and the previously stored reference tile metrics which were associated with image frame i. This comparison operation may be based upon predetermined threshold values. For example, a trail value for a tile may be computed when a given tile's average luminance exceeds the corresponding reference tile's average luminance by 30 levels, and/or when the given tile's std exceeds the std of the reference tile by 90 levels.

Each trail value is associated with a tile, and may therefore be stored in an n x m data structure. The trail value may be computed using the following equation:

$$trail(x, y) = 100 * (j) - \frac{avg(tile(x, y) - refTile(x, y))}{T}$$

where:

j: is the current frame number which corresponds to time;

avg(x,y): average luminance value of tile in position x,y in Frame j;

refTile(x,y): average luminance value of the reference tile in position x,y; and

T: threshold value (e.g., 30).

In general, the trail value indicates when a specific tile was uncovered. The larger the trail value, the later in time that particular was uncovered. However, the trail values contain information about both time and amount of luminance gained in order to "break ties" as to when various tiles were uncovered.

The time component of the trail value may be encoded by frame number j, and may only take on integer amounts. In order to provide greater granularity to the time component of the trail values, the time information (j) may be modified by the difference between the average luminance of the current tile and its corresponding reference. If this difference is large, it implies the tile in question was uncovered sooner, and thus an amount is deducted from the time information (this amount being the scaled difference). Each trail value may be stored in a two-dimensional structure called the de-cover map. The de-cover map may have n x m entries, each one corresponding to a tile position in the current image frame j. For example, a tile with trail value of 292 may be uncovered after a tile with trail 192 (a tile in the 200's range was de-covered after tile in the 100's range). "Ties" between tiles having been uncovered during the same image frame may be "broken" based on light level gained. For example, assume a tile with a trail of 299 (frame j = 3, still a bit dark) was de-covered after tile with trail 292 (frame j = 3, but got much brighter relative to its stored covered luma value).

Once a trail value has been computed for each tile position (each x, y over n, m tiles), the de-cover map is complete. A test may be performed to determine if a predetermined number of the tiles have an associated trail value (535) which may be associated with a de-cover state. The predetermined number of tiles may, for example, be a majority of tiles within the frame. If the determination is true, the process continues onto process 600. Otherwise, a test is performed to determine if a threshold number of frames have been processed (540, 545). If the number of frames exceeds the threshold, it implies the user is holding the finger on the image sensor, and the command may be interpreted as a "select" or "enter." (For example, the number of frames passed may be set to correspond to a two second time period.) Select / enter commands may be analogous to a mouse click or a key press of an "Enter" key on a keyboard, and it may be used to select an object or enter a value in the GUI of the mobile device 200.

Fig. 6 is a flowchart depicting an exemplary process 600 for determining a user command associated with the image-based touch user interface. The de-cover map may be thought of as a 3-D surface, where the x, y indices are tile position, and the z values are the tile values which correspond to the time of the finger motion as it de-coved the lens. In block 610, a gradient of the de-cover map may be computed to determine the de-cover map's steepest assent. The gradient and the tail values in the de-cover map may be compared to thresholds as a secondary or alternative method to determine if the user wishes to enter a "select/enter" command into the GUI (615 and 630). In this instance, if the trail values are high and the gradient is low (indicating the trail values are uniform), the user may have been steadily holding a finger on the image sensor to indicate a "select/enter" command.

From the gradient of the de-cover map, the direction of finger movement may be determined (620) in a number of different ways. For example, the processor 220 may find which of the n rows and m columns in the n x m de-cover map is the strongest. For example, for the following de-cover map:

$$480\ 480\ 560\ 570$$
$$470\ 480\ 480\ 560$$
$$460\ 470\ 480\ 480$$
$$440\ 460\ 470\ 470$$

The largest column is the last one, and the largest row is the first one, so the algorithm would tell the system to move the cursor to the upper right since that direction has the largest density of trails. Once the direction of movement is determined, a command may be issued to the user interface indicative of direction. Typically these commands would be made in a format that the device drivers of the mobile device 200 may readily accept.

In other embodiments, unique user gestures may be provided to the IBTUI for other commands. For example, multiple finger motions may be used to control unique features of the mobile device 200, or may be used as "shortcuts" for commands which may take multiple steps. For example, two down motions of the finger passed over the image sensor may be used to control parameters of the image sensor for taking photographs (i.e., control auto-focus, auto-exposure, handjitter reduction, etc.) in specific situations (e.g., setting short exposures for scanning barcodes).

As mentioned above, the image sensor 200 may be sensitive to other wavelengths besides those corresponding to visible light. For example, the image sensor 200 may be sensitive to infrared radiation so it may be used in low light situations. Such embodiments may utilize a sensor having the ability to disengage an IR blocking filter. Other sensors may utilize an IR radiation source (e.g., IR LED) which may be activated when the amount of visible light is below a useable threshold.

Moreover, the de-cover map may be extended to multi-dimensional structures having one dimension corresponding to time. Such data structures may be visualized as the three-dimensional rectangle, with the x-y dimensions corresponding to position, and the z dimension corresponding to time. In this data "volume," each data element may correspond to a trail value at point x, y in the image frame at time $t_j$.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the embodiments of the invention.

The methods, sequences and/or algorithms described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor.

Accordingly, an embodiment of the invention can include a computer readable media embodying a method for image-based touch user interface in accordance with functions, steps and/or actions described herein. Therefore embodiments of the invention can include a computer-readable medium including program code stored thereon, which, when executed by a machine, cause the machine to perform operations for processing image-based input commands for a user interface. The computer-readable medium including program code to receive image frames from a sensor; program code to determine when the sensor enters a cover state; program code to determine, from subsequent image frames, when the sensor enters a de cover state; program code to analyze information based upon the subsequent image frames to interpret a user command; and program code to issue the user command to a user interface. Accordingly, the invention is not limited to illustrated examples and any means for performing the functionality described herein are included in embodiments of the invention.

While the foregoing disclosure shows illustrative embodiments of the invention, it should be noted that various changes and modifications could be made herein without departing from the scope of the invention as defined by the appended claims. The functions, steps and/or actions of the method claims in accordance with the embodiments of the invention described herein need not be performed in any particular order. Furthermore, although elements of the invention may be described or claimed in the singular, the plural is contemplated unless limitation to the singular is explicitly stated.

## Claims

1. A method for processing image-based input commands for a user interface, comprising:

    receiving image frames from a sensor;
    determining when the sensor enters a cover state;
    determining, from subsequent image frames, when the sensor enters a de-cover state;
    analyzing information based upon the subsequent image frames to interpret a user command; and
    issuing the user command to a user interface.

2. The method according to claim 1, further comprising:

    subdividing an image frame into tiles;
    computing a metric for each tile; and
    performing a count of the tiles which have a predetermined value for the metric.

3. The method according to claim 2, further comprising:

    performing the method of claim 2 on subsequently received frames until the count exceeds a predetermined number.

4. The method according to claim 3, wherein when the count exceeds the predetermined number, further comprising:

    storing a reference metric for each tile;
    subdividing the subsequent frames into tiles;
    computing a metric for each tile; and
    computing at least one trail value for tiles having metrics exceeding predetermined values.

5. The method according to claim 4, further comprising

    performing the method of claim 4 on subsequently received frames until all tiles have a corresponding trail value.

6. The method according to claim 5, further comprising:

    interpreting the user command as "select" or "enter" if a predetermined number of image frames are processed before all of the tiles have a corresponding trail value.

7. The method according to claim 1, further comprising:

computing a gradient of a de-cover map;
determining the direction of movement based upon the gradient; and
issuing a command to the user interface based upon the direction.

8. The method according to claim 7, further comprising:

determining if the gradient exceeds a predetermined value;
determining if a predetermined number of trail values exceed a predetermined value; and
interpreting the user command as a "select" or "enter" based upon the gradient and trail determination.

9. The method according to claim 2, wherein the metric includes an average of the luminance and a standard deviation of the luminance.

10. The method according to claim 1, wherein the sensor is a camera.

11. The method according to claim 10, wherein the user command is entered by placing a finger over the camera.

12. The method according to claim 11, wherein a series of gestures are interpreted as a command associated with the camera's control parameters.

13. The method according to claim 1, wherein the image frames received from the sensor are substantially based upon infrared radiation.

14. An apparatus having an image-based user interface, comprising:

an image sensor; and
a processor connected to a memory, wherein the processor is configured with logic to

receive image frames from the image sensor;
determine when the image sensor enters a cover state;
determine, from subsequent image frames, when the image sensor enters a de-cover state;
analyze information based upon the subsequent image frames to interpret a user command; and
issue the user command to a user interface.

15. The apparatus according to claim 14, wherein the processor is further configured with logic to

subdivide an image frame into tiles;
compute a metric for each tile; and
perform a count of the tiles which have a predetermined value for the metric.

16. The apparatus according to claim 15, wherein the processor is further configured with logic to:

perform the logic of claim 15 on subsequently received frames until the count exceeds a predetermined number.

17. The apparatus according to claim 16, wherein the processor is further configured with logic to

store a reference metric for each tile;
subdivide the subsequent frames into tiles;
compute a metric for each tile; and
compute at least one trail value for tiles having metrics exceeding predetermined values.

18. The apparatus according to claim 17, wherein the processor is further configured with logic to

perform the logic of claim 4 on subsequently received frames until all tiles have a corresponding trail value.

19. The apparatus according to claim 18, wherein the processor is further configured with logic to

interpret the user command as "select" or "enter" if a predetermined number of image frames are processed before all of the tiles have a corresponding trail value.

20. The apparatus according to claim 14, wherein the processor is further configured with logic to

compute a gradient of a de-cover map;
determine the direction of movement based upon the gradient; and
issue a command to the user interface based upon the direction.

21. The apparatus according to claim 20, wherein the processor is further configured with logic to

determine if the gradient exceeds a predetermined value;
determine if a predetermined number of trail values exceed a predetermined value; and
interpret the user command as a "select" or "enter" based upon the gradient and trail determination.

22. The apparatus according to claim 15, wherein the metric includes an average of the luminance and a standard deviation of the luminance.

23. The apparatus according to claim 14, wherein the sensor is a camera and the user command is entered by placing a finger over the camera.

24. The apparatus according to claim 23, wherein the camera is recessed from a body of the apparatus so the finger does not come in physical contact with the camera.

25. A mobile device having an image-based touch user interface, comprising:

a camera; and
a processor connected to a memory, wherein the processor comprises logic configured to:

receive an image frame from the camera;
subdivide the image frame into tiles;
compute a metric for each tile;
perform a count of the tiles which have a predetermined value for the metric;
determine a de-cover map based upon trail values from subsequent image files;
compute a gradient of a de-cover map;
determine the direction of movement based upon the gradient; and
issue a command to the user interface based upon the direction.

26. An apparatus for processing image-based input commands for a user interface, comprising:

means for receiving image frames from a sensor;
means for determining when the sensor enters a cover state;
means for determining, from subsequent image frames, when the sensor enters a de-cover state;
means for analyzing information based upon the subsequent image frames to interpret a user command; and
means for issuing the user command to a user interface.

27. The apparatus according to claim 26, further comprising:

means for subdividing an image frame into tiles;
means for computing a metric for each tile; and
means for performing a count of the tiles which have a predetermined value for the metric.

28. The apparatus according to claim 27, further comprising:

means for processing subsequently received frames until the count exceeds a predetermined number.

29. The apparatus according to claim 28, wherein when the count exceeds the predetermined number, further comprising:

means for storing a reference metric for each tile;

means for subdividing the subsequent frames into tiles;
means for computing a metric for each tile; and
means for computing at least one trail value for tiles having metrics exceeding predetermined values.

**30.** A computer-readable medium including program code stored thereon, which, when executed by a machine, cause the machine to perform operations for processing image-based input commands for a user interface, the computer-readable medium comprising:

program code to receive image frames from a sensor;
program code to determine when the sensor enters a cover state;
program code to determine, from subsequent image frames, when the sensor enters a de-cover state;
program code to analyze information based upon the subsequent image frames to interpret a user command; and
program code to issue the user command to a user interface.

**31.** The computer-readable medium according to claim 30, further comprising:

program code to subdivide the image frame into tiles;
program code to compute a metric for each tile; and
program code to perform a count of the tiles which have a predetermined value for the metric.

**32.** The computer-readable medium according to claim 31, further comprising:

program code to process subsequently received frames until the count exceeds a predetermined number.

**33.** The computer-readable medium according to claim 32, wherein when the count exceeds the predetermined number, further comprising:

program code to store a reference metric for each tile;
program code to subdivide the subsequent frames into tiles;
program code to compute a metric for each tile; and
program code to compute at least one trail value for tiles having metrics exceeding predetermined values.

Fig. 1A

Fig. 1B

Fig. 1C

Fig. 1D

215 — Transceiver

220 — Processor

230
Image
Sensor

225 — Memory

210

200

Fig. 2

300

```
          ┌──────────────────┐
          │ Initialize Mobile │ ⌐ 310
          │      Device      │
          └──────────────────┘
                   │
                   ▼
  ⓐ ──────▶ ┌──────────────────┐ ⌐ 315
          │ Analyze Incoming  │
     ┌───▶ │    Luminance     │ ◀───┐
     │     │ Frames for Cover │     │
     │     └──────────────────┘     │
     │              │               │
     │              ▼               │
     │          ╱───────╲  ⌐ 320    │
     │   N     ╱ In Cover ╲         │
     └────────▢  State ?   ▢        │
              ╲          ╱          │
               ╲───────╱           │
                   │ Y             │
                   ▼               │
          ┌──────────────────┐     │
          │ Analyze Incoming  │     │
     ┌───▶ │    Luminance     │ ⌐ 325│
     │     │   Frames for     │     │
     │     │    De-cover      │     │
     │     └──────────────────┘     │
     │              │               │
     │              ▼               │
     │          ╱───────╲  ⌐ 330    │
     │   N     ╱ In De-cover╲       │
     └────────▢   State ?   ▢       │
              ╲          ╱          │
               ╲───────╱           │
                   │ Y             │
                   ▼               │
          ┌──────────────────┐     │
          │ Analyze De-cover │ ⌐ 335│
          │       Map        │     │
          └──────────────────┘     │
                   │               │
                   ▼               │
          ┌──────────────────┐     │
    340 ⌐ │  Interpret and   │─────┘
          │  Issue Command   │
          └──────────────────┘
```

Fig. 3

400

```
        ┌─────────────────┐
  410 ──│  Receive Frame i │◄──────────┐
        └─────────────────┘            │
                 │                      │
                 ▼                      │
        ┌─────────────────┐            │
        │ Break Frame i into│  415      │
        │      Tiles        │          │
        └─────────────────┘            │
                 │                      │
                 ▼                      │
        ┌─────────────────┐            │
        │    Compute       │            │
        │ Luminance and/or │  420       │
        │ Detail Metric(s) for│         │
        │    Each Tile     │            │
        └─────────────────┘            │
                 │                      │
                 ▼                      │
        ┌─────────────────┐            │
        │ Count Number of  │            │
        │  Tiles Having    │  425       │
        │  Predetermined   │            │
        │   Metric(s)      │            │
        └─────────────────┘            │
                 │                      │
                 ▼                      │
              ◇ 430                     │
       Y   ╱ Count Exceed ╲            │
  (B)◄─────  Threshold ?              │
           ╲            ╱              │
              ◇                        │
                 │ N                    │
                 ▼                      │
        ┌─────────────────┐            │
  435 ──│    i = i + 1     │───────────┘
        └─────────────────┘
```

Fig. 4

Fig. 5

600

```
        (C)
         │
         ▼
┌──────────────────┐
│ Compute Gradient │  ～ 610
│  of De-Cover Map │
└──────────────────┘
         │
         ▼
      ／615
     ╱         ╲
    ╱ Gradient  ╲        ┌──────────────────┐
   ╱  and Trail  ╲   Y   │   Interpret as   │
  ╱ Exceed Thresholds╲──────▶│ "Select/Enter" and│ ～ 630
   ╲      ?      ╱        │  Issue Command   │
    ╲         ╱          │  to User Interface│
     ╲       ╱           └──────────────────┘
         │ N                      │
         ▼                        ▼
┌──────────────────┐            (A)
│    Determine     │  ～ 620
│   Direction of   │
│    Movement      │
└──────────────────┘
         │
         ▼
┌──────────────────┐
│  Issue Command   │
│ to User Interface│  ～ 625
│    Indicating    │
│    Direction     │
└──────────────────┘
         │
         ▼
        (A)
```

Fig. 6

**European Patent Office**

Europäisches
Patentamt
European
Patent Office
Office européen
des brevets

## EUROPEAN SEARCH REPORT

Application Number

EP 08 00 6423

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 791 531 B1 (JOHNSTON RICHARD S [US] ET AL) 14 September 2004 (2004-09-14)<br>* column 8, line 37 - line 45 *<br>* column 10, line 56 - line 58 *<br>* column 13, line 49 - line 57 *<br>* column 14, line 22 - line 25 *<br>* column 16, line 33 - line 41 *<br>* column 19, line 44 - line 59 *<br>* column 25, line 58 - column 26, line 19 *<br>* claim 1 *<br>----- | 1-33 | INV.<br>G06F3/048 |

TECHNICAL FIELDS
SEARCHED (IPC)

G06F

The present search report has been drawn up for all claims

| Place of search | Date of completion of the search | Examiner |
|---|---|---|
| Munich | 16 March 2009 | Wiedmeyer, Vera |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 08 00 6423

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2009

| Patent document cited in search report | Publication date | Patent family member(s) | Publication date |
|---|---|---|---|
| US 6791531 B1 | 14-09-2004 | NONE | |

EPO FORM P0459

For more details about this annex : see Official Journal of the European Patent Office, No. 12/82